# EUROPEAN PATENT SPECIFICATION

(11) **EP 1 500 548 B1**
(45) Date of publication and mention of the grant of the patent: **25.04.2007**
(21) Application number: 03706976.2
(22) Date of filing: 19.02.2003
(51) Int. Cl.: B60K 35/00

(54) **DISPLAY FOR VEHICLE**
ANZEIGE FÜR FAHRZEUG
SYSTEME D'AFFICHAGE POUR VEHICULE

(30) Priority: 22.04.2002 JP 2002118972; 20.05.2002 JP 2002144356
(43) Date of publication of application: 26.01.2005
(73) Proprietor: NIPPON SEIKI CO., LTD., Nagaoka-shi, Niigata 940-8580 (JP)
(72) Inventor: NAGANO, Keiichi, R & D Center, Nagaoka-shi, Niigata 940-2141 (JP); TAKATOH, Katsuei, R & D Center, Nagaoka-shi, Niigata 940-2141 (JP); HARA, Shigehiko, R & D Center, Nagaoka-shi, Niigata 940-2141 (JP)
(74) Representative: Carpmaels & Ransford
(86) International application number: PCT/JP2003/001828
(87) International publication number: WO 2003/089263

(56) References cited:
- JP-A- 6 048 218
- JP-A- 11 278 100
- JP-A- 62 101 535
- JP-A- 2001 097 073
- JP-U- 2 085 474
- JP-U- 63 008 130
- US-A- 5 734 357
- PATENT ABSTRACTS OF JAPAN vol. 2000, no. 01, 31 January 2000 (2000-01-31) & JP 11 278100 A (NIPPON SEIKI KK), 12 October 1999 (1999-10-12)
- PATENT ABSTRACTS OF JAPAN vol. 017, no. 497 (M-1476), 8 September 1993 (1993-09-08) & JP 05 124457 A (NIPPONDENSO CO LTD), 21 May 1993 (1993-05-21)
- PATENT ABSTRACTS OF JAPAN vol. 017, no. 358 (M-1440), 7 July 1993 (1993-07-07) & JP 05 050872 A (NIPPONDENSO CO LTD), 2 March 1993 (1993-03-02)

## Description

### Technical Field

The present invention relates to display apparatus for vehicles, particularly relates to display apparatus for vehicles in which an angular position of a reflecting member for reflecting display light emitted from a display device is adjustable.

### Background Art

JP 06 048 218 discloses a display apparatus according to the preamble of claim 1.

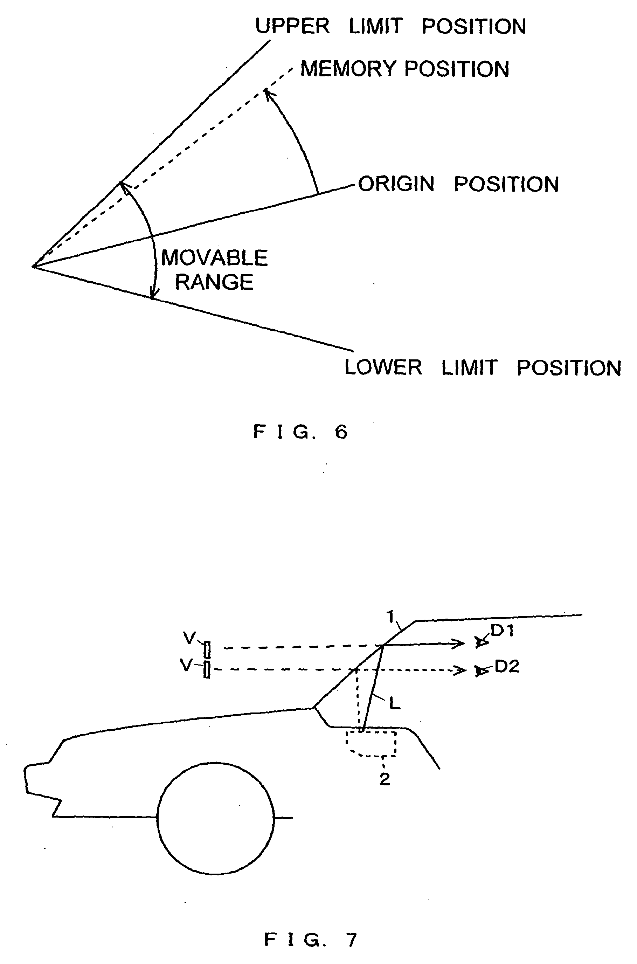

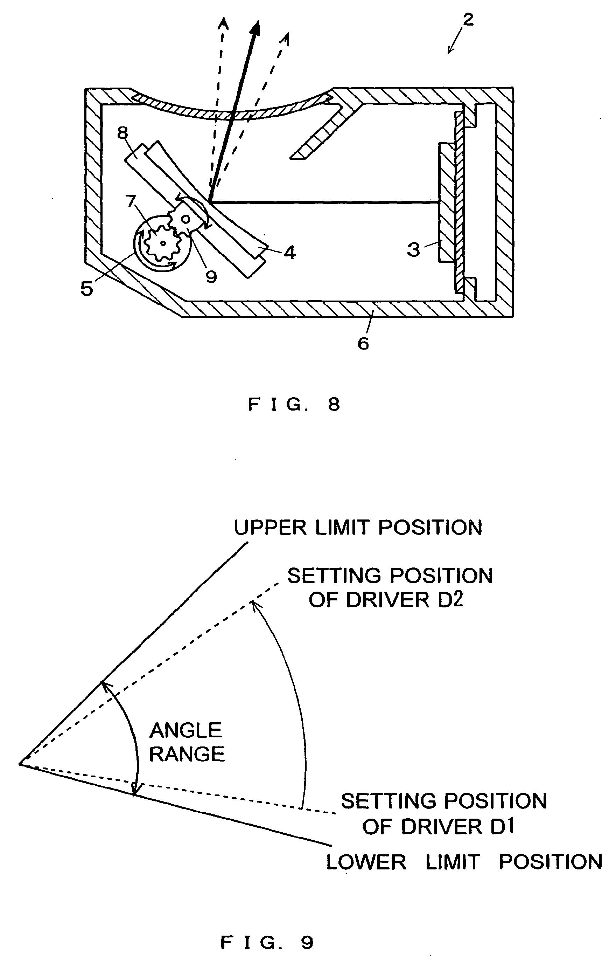

There has been head up display apparatus that displays a virtual image V by projecting display light L from a display unit 2 to a windshield 1 of a vehicle (refer to Fig.7). The display unit 2 has a display device 3 such as fluorescent display tube, reflecting mirror 4 for reflecting display light L emitted from the display device 3, and stepping motor 5 for rotating the reflecting mirror 4, which are contained in a housing 6 (refer to Fig.8). A gear 7 is mounted on a rotation axis of the stepping motor 5, and engaged with a gear part 9 fixed to a holding member 8 for holding the reflecting mirror 4.

A driver can set an angular position of the reflecting mirror 4 in an angle range (for example, 6 deg.) between an upper limit position and a lower limit position by operating a not-shown push button switch, thereby adjust a direction of the display light L projected to the windshield 1. For example, when the angular position of the reflecting mirror 4 is set near the lower limit position, the mirror can be set suit for a driver D1 having a high visual point, and when the angular position of the reflecting mirror 4 is set near the upper limit position, the mirror can be set suit for a driver D2 having a low visual point. To avoid complicity of the figure, in Fig. 9, the angle range between the upper limit position and the lower limit position is shown in a magnified manner.

However, there has been a problem in the case that the driver D1 finishes driving of a vehicle by turning of f an ignition switch, and at a later date, another driver D2 adjusts the angular position of the reflecting mirror 4. That is, the angular position of the reflecting mirror 4 must be angularly moved from neighborhood of the lower limit position to neighborhood of the upper limit position, resulting in a large moving angle, therefore long time (for example, 2 sec.) is required for setting the angular position of the reflective mirror 4 by manual operation.

The invention, which was made in the light of the problem, provides display apparatus for vehicle in which the angular position of the reflecting mirror can be set in comparatively short time.

This problem is solved by a display apparatus for vehicles according to the preamble of claim 1.

### Brief Description of the Drawings

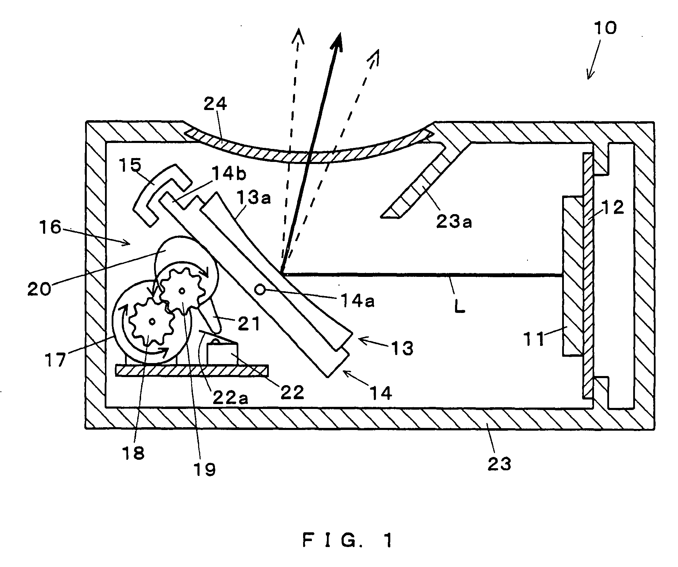

Fig.1 is a section view of a display unit showing an embodiment of the invention;
Fig.2 is an explanatory drawing of a movable range of a reflecting mirror;
Fig.3 is a block diagram of head up display apparatus;
Fig.4 and Fig.5 are flow charts of angular movement of the reflecting mirror; and,
Fig.6 is an explanatory drawing of the angular movement of the reflecting mirror.
Fig.7 to Fig. 9 are views showing examples in the related arts; wherein Fig.7 is a view of a schematic configuration of head up display apparatus; Fig. 8 is a section view of a display unit; and Fig. 9 is an explanatory drawing of the angular movement of the reflecting mirror.

### Best Mode for Carrying Out the Invention

Hereinafter, an embodiment in which the invention is used for the head up display apparatus is described according to appended drawings.

10 is a display unit, and the display unit 10 is arranged in a dashboard of a vehicle. Display light L projected by the display unit 10 is reflected by a windshield toward a driver. The driver of the vehicle can see a virtual image superposed with scenery.

11 is a liquid crystal display device (display device), and the liquid crystal display device comprises a TFT liquid crystal display element and a backlight. 12 is a circuit board, and the liquid crystal display device 11 is mounted on the circuit board 12. 13 is a reflecting mirror (reflecting member), and the reflecting mirror 13 reflects the display light L emitted from the liquid crystal display device 11 to the windshield. The reflecting mirror 13 includes a reflecting face 13a formed by evaporating a metal such as aluminum on resin such as polycarbonate. The reflecting face 13a of the reflecting mirror 13 is a concave face, and can project the display light L from the liquid crystal display device 11 to the windshield in a magnified manner.

14 is a holding member, and the reflecting mirror 13 is fixed to the holding member 14 by a pressure sensitive adhesive double coated tape. The holding member 14 has an axis 14a, and the axis 14a is pivotally supported by a bearing provided in a housing described later. The reflecting mirror 13 and the holding member 14 are supported in a swingable manner, and angularly moved around the axis part 14a. The holding member 14 has a protrusion 14b. 15 is a stopper, and the stopper 15 is contacted with the protrusion 14b, thereby a movable range of the reflecting mirror 13 is limited.

16 is a driving mechanism (driving means), and the driving mechanism 16 has a stepping motor 17, gear 18, gear 19 and cam 20. Using the driving mechanism 16, the angular position of the reflecting mirror 13 is adjusted in the angle range between the upper limit position and the lower limit position. The gear 18 is fixed to a rotation axis of the stepping motor 17, and the gear 19 is engaged with the gear 18. The cam 20 is fixed to the gear 19, and rotates around an axis of the gear 19. The holding member 14 is pressed to the cam 20 by a not-shown coil spring, and the reflecting mirror 13 is angularly moved with the holding member 14 by rotation of the cam 20.

21 is a striker, and the striker 21 is integrally formed with the cam 20. 22 is a microswitch, and the microswitch 22 is turned on by the striker 21 when the reflecting member 13 is near the origin position of the movable range. That is, the microswitch 22 detects whether the reflecting member 13 is near the origin position or not.

23 is a housing, and the housing 23 contains the liquid crystal display device 11, circuit board 12, reflecting mirror 13, driving mechanism 16 and the like. 23a is a shading wall, and the shading wall 23a is integrally formed with the housing 23, and prevents a phenomenon (washout) that outside light such as sunlight is entered into the liquid crystal display device 11, causing reduction of visuality of the virtual image. A translucent cover 24 through which the display light L passes is arranged in the housing 23. The translucent cover 24, comprising translucent resin such as acrylic resin, has an arcuate shape.

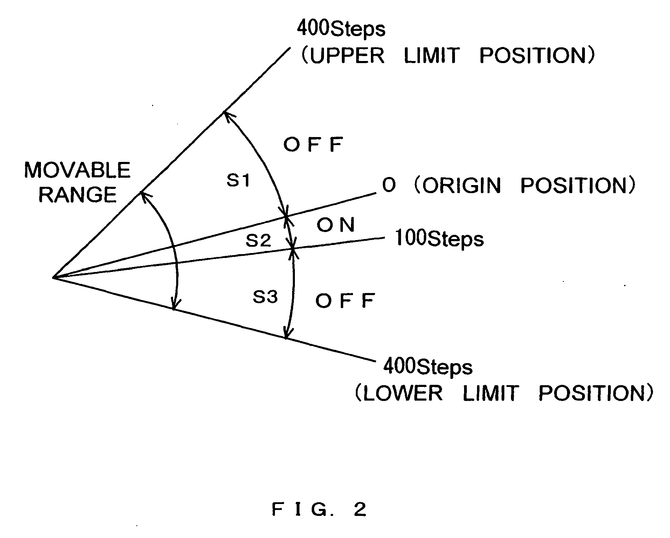

Next, the movable range and the like of the reflecting mirror 13 are described according to Fig. 2. The movable range of the reflecting mirror 13, which is appropriately established according to an area, called eye range, in which eyes of the driver are set, is about 6 deg. in this embodiment, or 800 steps in the number of steps of the stepping motor 17. The origin position is a center of the rotation range, and a range S1 from the origin position to the upper limit position is 400 steps, and ranges S2, S3 from the origin position to the lower limit position are 400 steps. The range S2 in which the microswitch 22 is turned on is 100 steps or less from the origin position to a side of the lower limit position.

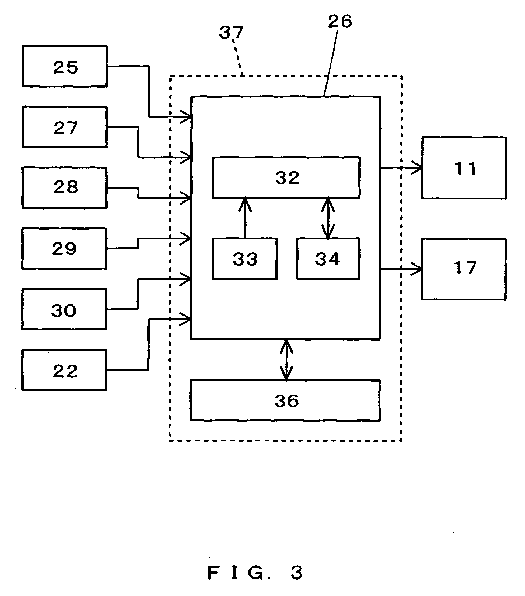

Fig.3 is a block diagram showing an electrical configuration of the head up display apparatus. 25 is a velocity sensor, and the velocity sensor 25 detects velocity of the vehicle and outputs a velocity signal to a microcomputer 26. 27, 28 are push button switches. When the push button switches 27, 28 are turned on, a switch operating signal is outputted to the microcomputer 26, and the microcomputer 26 outputs a driving signal to the stepping motor 17 through a not-shown driver circuit, thereby rotates a rotation axis of the stepping motor 17. The stepping motor 17 rotates about 0.23 deg. per step, and makes one turn at 1560 steps. When the push button 27 is turned on, the reflecting mirror 13 is angularly moved downward, and when the push button 28 is turned on, the reflecting mirror 13 is angularly moved upward.

29 is a memory switch (memory operating means), and when the memory switch 29 is turned on, a switch operating signal is outputted to the microcomputer 26. When the memory switch 29 is remained on for at least 5 seconds, the microcomputer 26 makes angular position data of the reflecting mirror 13 at the point be memorized in EEPROM described later. That is, when the memory switch 29 is continuously pushed for at least 0.5 sec., the angular position of the reflecting mirror 13 at the point (hereinafter, mentioned as memory position) is memorized.

When the memory switch 29 is turned on and then turned off in less than 0.5 sec., the microcomputer 26 outputs a driving signal to the stepping motor 18 according to the memorized angular position data. That is, when the memory switch 29 is remained on for less than 0.5 sec., the reflecting mirror 13 is angularly moved to the memorized angular position.

30 is an ignition switch, and the ignition switch 30 outputs an ignition state signal indicating which position of OFF, ACC, and ON the ignition is located on to the microcomputer 26. The microswitch 22 detects whether the reflecting mirror 13 is near the origin position (or a position about 3 deg. upper from the lower limit position) or not.

In this specification, "when the ignition switch is turned on" includes not only when the ignition switch 30 is turned from ACC to ON, but also turned from OFF to ACC, and "when the ignition switch is turned off" includes not only when the ignition switch 30 is turned from ON to ACC, but also turned from ACC to OFF.

The microcomputer 26 has CPU 32, ROM 33 and RAM 34, and performs predetermined arithmetic processing according to a velocity signal to indicate the velocity on the liquid crystal display device 11, or activates the stepping motor 18 to adjust the angle of the reflecting mirror 13. 36 is the EEPROM (memory part), and the EEPROM 36 stores the angular position data memorized by operating the memory switch 29. The angular position data are the number of steps from the central position to the memory position. A control part 37 (control means) comprises the microcomputer 26 and the EEPROM 36.

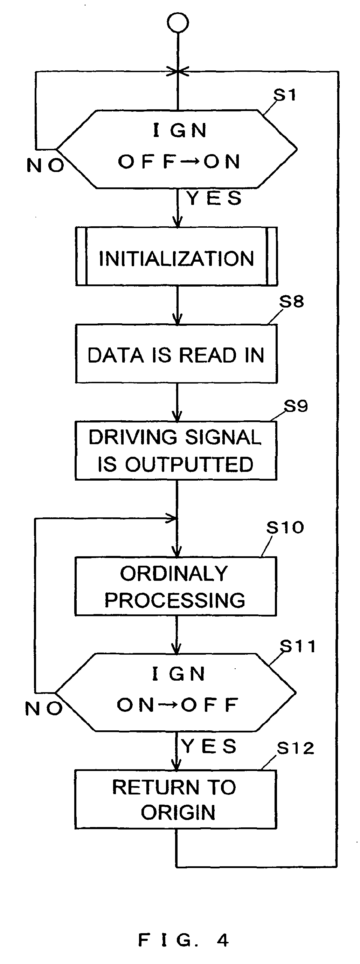

Next, the angular movement to the memory position is described in detail according to a flowchart shown in Fig.4. The microcomputer 26 monitors whether the ignition switch 30 is turned on or not (step S1). When the ignition switch 30 is turned on, initialization is executed. The initialization is described later. Next, the memorized angular position data are read out from the EEPROM 36 (step S8). Next, in step S9, a driving signal is outputted to the stepping motor 18 through the driving circuit according to the read-out angular position data, thereby the reflecting mirror 13 is angularly moved to the memory position (refer to Fig.6). After processing of step S3 is completed, the microcomputer 26 performs ordinary processing such as velocity indication (step S10). When the ignition switch 30 is turned off, the microcomputer outputs a driving signal to the stepping motor 17 to return the reflecting mirror 13 to a central position as the origin position (steps S11, S12).

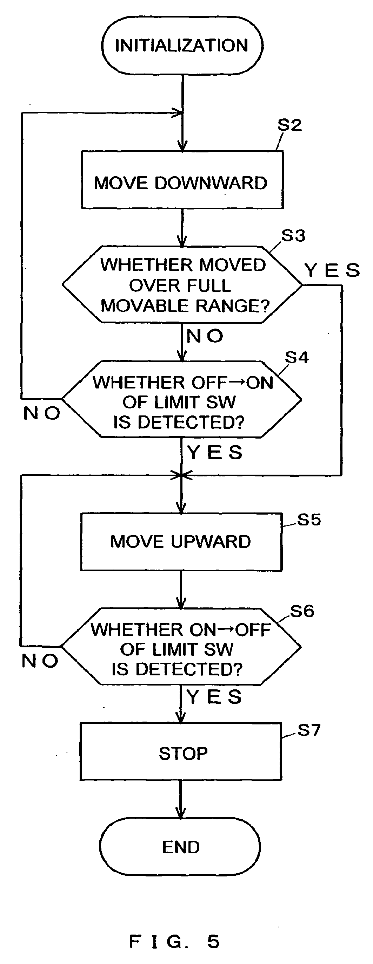

Next, the initialization is described in detail according to a flowchart shown in Fig.5. When the ignition switch 30 is turned on, the microcomputer 26 outputs a driving signal to the stepping motor 17 to angularly move the reflecting mirror 13 downward (step S2). In steps S2, S3, when the microswitch 22 is turned from off to on, and when the microswitch 22 is not turned fromoff to on even if the rotation axis of the stepping motor 17 rotates 800 steps, the initialization is advanced to step S5. Next, in steps S5, S6, when the microswitch 22 is turned from on to off by angularly moving the reflecting mirror 13 upward, the stepping motor 17 is stopped.

In the stepping motor 17, there is an advantage that a rotation angle of the rotation axis can be specified by giving the number of steps in correspondence with a desired rotation angle, but on the other hand, a phenomenon of step-out occurs. The step-out is a phenomenon that since the rotation axis of the stepping motor 17 has an infinite number of magnetically stable positions, the axis jumps over an original angular position and shifts to another stable position (for example, refer to JP-A-8-182392). Therefore, in the embodiment, when the ignition switch 30 is turned on, the reflecting mirror 13 is returned to the origin position, and even if the step-out phenomenon occurs due to some reason, the reflecting mirror 13 can be angularly moved to the memory position.

In the embodiment, when the ignition switch 30 is turned off, the reflecting mirror 13 is returned to the central position, thereby when the vehicle is intended to be restarted, since the reflecting mirror 13 is in the central position, a period while the reflecting mirror 13 is angularly moved to the memory position can be comparatively reduced.

When the ignition switch 30 is turned off, the angular position to which the reflecting mirror 13 is returned can not be the central position, and for example, if it is a position upper from 2 deg. to 4 deg. from the lower limit position, the advantage that the period while the reflecting mirror 13 is angularly moved to the memory position is comparatively reduced is obtained.

In addition, a function of memorizing the memory position may not be provided, and when the ignition switch 30 is turned off, the reflecting mirror 13 is returned to the middle position, thereby the angular position of the reflecting mirror 13 can be set in shorter time than in the related arts.

In the embodiment, the angular position of the reflecting mirror 13 is memorized in the EEPROM 36, thereby complexity of adjusting the angular position of the reflecting mirror 13 can be reduced. When the ignition switch 30 is turned on, the reflecting mirror 13 is returned to the origin position, and the reflecting mirror 13 is aligned with the predetermined angular position using the number of steps from the origin position, and even if the angle sensor for detecting the angular position of the reflecting mirror 13 is not provided, the reflecting mirror 13 can be aligned with the memory position.

In the embodiment, when the ignition switch was turned on, the reflecting mirror 13 was angularly moved to the memory position memorized using the memory switch 29. However, it is sufficient that an angular position at the time the ignition switch 30 was turned off is memorized, and when the ignition switch 30 is turned on, the reflecting mirror 13 is angularly moved to the angular position at the time the ignition switch 30 was turned off.

In addition, while the display device in the embodiment was the liquid crystal display device 11, it can be, for example, a fluorescent display tube or an organic EL display panel. Also, while the stepping motor 17 was employed in the driving mechanism 16, for example, a servomotor can be employed. Also, while the memory part was the EEPROM 36, it can be, for example, a flash memory.

Furthermore, in the embodiment, while only one of the angular position data of the reflecting mirror 13 is memorized, a plural number of angular position data can be memorized in order to memorize at least two memory positions. In addition, while the embodiment was an embodiment of the head up display, it will be obvious that the embodiment can be applied to, for example, a virtual-image-display combination meter.

It is desired that the liquid crystal display device 11 is remained off during the initialization (step S2 to step S6) and the return to origin (step S11, step S12). Industrial Applicability

The invention is usable for the display apparatus for vehicles, and particularly suitable for the head up display apparatus for vehicles.

## Claims

1. Display apparatus (10) for vehicles comprising:
a display device (11) that emits display light,
a reflecting member (13) for reflecting the display light, and
driving means for angularly moving the reflecting member in a predetermined angle range wherein a middle position of the angle range is an origin position, and
**characterised in that**:
the driving means comprises a cam (20), the cam (20) having a striker (21) integrally formed therewith, and further comprising:
a microswitch (22) arranged such that the microswitch (22) is activated by the striker (21) when the reflecting member (13) is near the middle position.

2. The display apparatus (10) for vehicles according to claim 1 further comprising:
control means for angularly moving the reflecting member (13) to the origin position when an ignition switch is turned on.

3. The display apparatus (10) for vehicles according to claim 1 further comprising:
a memory part for memorizing an angular position of the reflecting member (13) and
memory operating means (29) for making the angular position be memorized in the memory part.

4. The display apparatus (10) for vehicles according to claim 3 wherein when the ignition switch is turned on, the reflecting member (13) is angularly moved to the angular position memorized in the memory part.

5. The display apparatus (10) for vehicles according to claim 3 wherein when the ignition switch is turned on, the reflecting member (13) is angularly moved to the origin position, and then the reflecting member (13) is angularly moved to the angular position memorized in the memory part.

6. The display apparatus (10) for vehicles according to claim 2 further comprising:
a first operation switch (28) for angularly moving the reflecting member (13) upward and
a second operation switch (27) for angularly moving the reflecting member (13) downward.

7. The display apparatus (10) for vehicles according to claim 1 wherein the driving means has a stepping motor (17).

8. The display apparatus (10) for vehicles according to claim 7 wherein when the ignition switch is turned on, if the stepping motor (17) outputs the number of steps in correspondence with the movable range and thus the reflecting member (13) is angularly moved to one of an upside and a downside, the control means angularly moves the reflecting member (13) to the other of the upside and the downside to return the reflecting member (13) to the origin position.

## Patentansprüche

1. Anzeigegerät (10) für Fahrzeuge, umfassend:
eine Anzeigevorrichtung (11), welche Anzeigelicht emittiert,
ein reflektierendes Glied (13) zum Reflektieren des Anzeigelichts, und
Antriebsmittel zum winkeligen Bewegen des reflektierenden Glieds in einem vorbestimmten Winkelbereich, wobei eine Mittelposition des Winkelbereichs eine Ursprungsposition ist, und **dadurch gekennzeichnet, daß**:
die Antriebsmittel einen Nocken (20) umfassen, wobei der Nocken (20) einen Abstreifer bzw. Anschlag (21) einstückig bzw. integral damit ausgebildet aufweist, und weiterhin umfassend:
einen Mikroschalter (22), der derart angeordnet Ist, daß der Mikroschalter (22) durch den Abstreifer (21) aktiviert ist, wenn sich das reflektierende Glied (13) nahe der Mittelposition befindet.

2. Anzeigegerät (10) für Fahrzeuge nach Anspruch 1, weiterhin umfassend:
Steuer- bzw. Regelmittel zum winkeligen Bewegen des reflektierenden Glieds (13) zu der Ursprungsposition, wenn ein Zündschalter eingeschaltet ist.

3. Anzeigegerät (10) für Fahrzeuge nach Anspruch 1, weiterhin umfassend:
ein Speicherteil zum Speichern einer Winkelposition des reflektierenden Glieds (13) und
Speicherbetätigungsmittel (29), um die Winkelposition auszubilden bzw. herzustellen, die in dem Speicherteil gespeichert ist.

4. Anzeigegerät (10) für Fahrzeuge nach Anspruch 3, wobei, wenn der Zündschalter eingeschaltet ist, das reflektierende Glied (13) winkelig zu der Winkelposition bewegt ist, die in dem Speicherteil gespeichert ist.

5. Anzeigegerät (10) für Fahrzeuge nach Anspruch 3, wobei, wenn der Zündschalter eingeschaltet ist, das reflektierende Glied (13) winkelig zu der Ursprungsposition bewegt ist, und dann das reflektierende Glied (13) winkelig zu der Winkelposition bewegt ist, die in dem Speicherteil gespeichert ist.

6. Anzeigegerät (10) für Fahrzeuge nach Anspruch 2, weiterhin umfassend:
einen ersten Betätigungsschalter (28) zum winkeligen Bewegen des reflektierenden Glieds (13) nach oben, und
einen zweiten Betätigungsschalter (27) zum winkeligen Bewegen des reflektierenden Glieds (13) nach unten.

7. Anzeigegerät (10) für Fahrzeuge nach Anspruch 1, wobei die Antriebsmittel einen Schrittmotor (17) aufweisen.

8. Anzeigegerät (10) für Fahrzeuge nach Anspruch 7, wobei, wenn der Zündschalter eingeschaltet ist, wenn der Schrittmotor (17) die Anzahl von Schritten in Übereinstimmung mit dem bewegbaren Bereich ausgibt und somit das reflektierende Glied (13) winkelig zu einer Aufwärtsseite oder Abwärtsseite bewegt ist, die Steuer- bzw. Regelmittel winkelig das reflektierende Glied (13) zu der anderen der Aufwärtsseite oder Abwärtsseite bewegen, um das reflektierende Glied (13) zu der Ursprungsposition zurückzuführen.

## Revendications

1. Appareil d'affichage (10) pour véhicule, comprenant :
un dispositif d'affichage (11) qui émet une lumière d'affichage,
un élément réflecteur (13) destiné à réfléchir la lumière d'affichage et
un moyen d'entraînement pour un déplacement angulaire de l'élément réflecteur dans une gamme d'angles prédéterminée dans laquelle la position médiane de la gamme d'angles est une position d'origine,
**caractérisé en ce que** :
le moyen d'entraînement comprend une came (20), la came (20) comportant un percuteur (21) formé d'une seule pièce avec celle-ci, et comprenant en outre :
un microrupteur (22) agencé de manière à ce que le microrupteur (22) soit actionné par le percuteur (21) lorsque l'élément réflecteur (13) est à proximité de la position médiane.

2. Appareil d'affichage (10) pour véhicule selon la revendication 1, comprenant en outre :
un moyen de commande pour un déplacement angulaire de l'élément réflecteur (13) vers la position d'origine lorsqu'un commutateur d'allumage est mis sur la position de marche.

3. Appareil d'affichage (10) pour véhicule selon la revendication 1, comprenant en outre :
une partie de mémorisation destinée à mémoriser une position angulaire de l'élément réflecteur (13) et
un moyen d'actionnement de la mémoire (29) destiné à faire mémoriser la position angulaire dans la partie de mémorisation.

4. Appareil d'affichage (10) pour véhicule selon la revendication 3, dans lequel, lorsque le commutateur d'allumage est mis sur la position de marche, l'élément réflecteur (13) est déplacé angulairement vers la position angulaire mémorisée dans la partie de mémorisation.

5. Appareil d'affichage (10) pour véhicule selon la revendication 3, dans lequel lorsque le commutateur d'allumage est mis sur la position de marche, l'élément réflecteur (13) est déplacé angulairement vers la position d'origine, puis l'élément réflecteur (13) est déplacé angulairement vers la position angulaire mémorisée dans la partie de mémorisation.

6. Appareil d'affichage (10) pour véhicule selon la revendication 2, comprenant en outre :
un premier commutateur de fonctionnement (28) destiné à déplacer angulairement l'élément réflecteur (13) vers le haut, et
un second commutateur de fonctionnement (27) destiné à déplacer angulairement l'élément réflecteur (13) vers le bas.

7. Appareil d'affichage (10) pour véhicule selon la revendication 1, dans lequel le moyen d'entraînement comporte un moteur pas à pas (17).

8. Appareil d'affichage (10) pour véhicule selon la revendication 7, dans lequel, lorsque le commutateur d'allumage est mis sur la position de marche, si le moteur pas à pas (17) produit le nombre de pas correspondant à la gamme mobile et qu'ainsi l'élément réflecteur (13) est déplacé angulairement vers le haut ou vers le bas, le moyen de commande déplace angulairement l'élément réflecteur (13) dans l'autre direction pour remettre l'élément réflecteur (13) dans sa position d'origine.
